# EUROPÄISCHE PATENTANMELDUNG

(11) **EP 1 774 852 A2**
(43) Veröffentlichungstag der Anmeldung: **18.04.2007**
(21) Anmeldenummer: 06019827.2
(22) Anmeldetag: 22.09.2006
(51) Int. Cl.: A01N 1/02, G01N 1/42

(54) **Zahn-Einfrier-Behälter**

(30) Priorität: 30.09.2005 DE 102005047438
(71) Anmelder: Stiftung Caesar Center of Advanced European Studies and Research, 53175 Bonn (DE)
(72) Erfinder: Botkin, Nicolai, D-85716 Unterschlissheim (DE); Degistirici, ÖZER, D-52177 Bonn (DE); Fassbender, Boris, D-53773 Hennef (DE); Siemonsmeier, Jürgen, D-53127 Bonn (DE); Thie, Michael, D-53175 Bonn (DE)
(74) Vertreter: Braun-Dullaeus, Karl-Ulrich

(57) **Zusammenfassung**

Behälter für die Kryokonservierung einer festen Gewebsprobe 10, insbesondere von Zahngewebe, aufweisend einen Aufnahmeraum 1 zur Aufnahme einer die Probe 10 umspülenden Lösung 2,12, wobei der Aufnahmeraum 1 von einer Wandung 3 aus tieftemperaturbeständigem Material mit einer geringen Wärmeleitfähigkeit, insbesondere aus Kunststoff, umgeben ist, wobei der Aufnahmeraum 1 über eine Öffnung 4 zugänglich ist, wobei die Öffnung 4 nach Eingabe der Probe 10 mit einem Verschlusselement 5 dichtend verschließbar ist, wobei in die Wandung 3 ein Kontaktelement 9,15 mit hoher Wärmeleitfähigkeit, insbesondere aus Metall, eingelassen ist, wobei eine Außenfläche des Kontaktelementes 9,15 von außen zugänglich ist und zur unmittelbaren Kontaktierung mit einem Kälteerzeuger 13 ausgebildet ist, wobei im Aufnahmeraum 1 ein Aufnahmemittel 8,16 vorgesehen ist, das die Probe 10 während des Einfrierens in Position hält, wobei die definierte Position in einem Abstand zu der Startposition ist, an der die Bildung der Eiskristalle beginnt.

## Beschreibung

Die vorliegende Erfindung betrifft einen Behälter für den Transport, die Lagerung und vor allem die Kryokonservierung einer festen Gewebsprobe, insbesondere von Zahngewebe, wobei der Behälter einen Aufnahmeraum zur Aufnahme einer die Probe umspülenden Lösung aufweist, wobei der Aufnahmeraum von einer Wandung aus tieftemperaturbeständigem Material mit einer geringen Wärmeleitfähigkeit, insbesondere aus Kunststoff, umgeben ist, wobei der Aufnahmeraum über eine Öffnung zugänglich ist und wobei die Öffnung nach Eingabe der Probe mit einem Verschlusselement dichtend verschließbar ist. Zudem betrifft die Erfindung ein Verfahren zur Kryokonservierung fester Proben.

Behälter zur Kryokonservierung verschiedenartiger flüssiger Proben sind hinlänglich bekannt. So zeigt beispielsweise das US 5,059,399 einen Behälter, der für die für Kryokonservierung insbesondere von Spermaproben eingesetzt werden kann. Die in diesem Behälter befindliche Proben können einem kontrollierten Gefrierprozess unterzogen werden. Wie die meisten bekannten Behälter, so sind auch diese in ihrer Größe, ihrer Geometrie und ihrem Temperaturleitvermögen an einen besonderen Einsatzzweck angepasst.

Dabei ist der in US 5,059,399 gezeigte Behälter für die Aufbewahrung flüssiger Proben, wie Zellsuspensionen, geeignet. Zum Einfrieren des Probenmaterials wird der Behälter als Ganzes in ein Kryomedium, insbesondere in flüssigen Stickstoff eingebracht. Im Falle des in dem US gezeigten Behälters erfolgt der Wärmeaustausch über einen in den Boden des Behälters eingesteckten Bolzen aus Metall, der als Kältebrücke zum Aufnahmeraum dient. Diese Kältebrücke bewirkt, dass das Probenmaterial mit vergleichsweise hoher Geschwindigkeit durchfriert.

Problematisch an den bekannten Behältnissen ist, dass sie sich zwar für die Kryokonservierung von suspendierten Zellen, also flüssigen Proben, aber wegen des Auftretens von Gefrierschäden kaum für die Kryokonservierung von Geweben,also festen Proben, eignen. Unter einer festen Probe ("solid tissue") wird Gewebe, wie Knorpel, Knochen, Fett, Nerven oder Muskel, verstanden. Also Proben, die aus Zellen bestehen, die in eine strukturierte Matrix insbesondere in extrazelluläre Matrix, Stroma, Parenchym oder Mesenchym, eingebettet sind. Dabei ist egal wie weich das Material der festen Probe ist. Im Gegensatz dazu sind flüssige Proben Zellsuspensionen wie Blut, Knochenmarkaspirate, Samen- oder Spülflüssigkeiten (Lavage aus Lunge oder Uterus). Suspendierte Zellen aus Kulturversuchen zählen ebenso dazu. Diese Proben weisen - wie eine feste Probe auch - Zellen auf, die aber frei sind und "in einer Flüssigkeit "schwimmen" und nicht in einer Matrix eingebunden sind.

Aufgabe der Erfindung ist es nunmehr, einen Behälter für den Transport und die Kryokonservierung fester Gewebsproben zu schaffen, der kostengünstig in der Herstellung ist und sich daher besondere als Einwegbehälter eignet, wobei der Behälter bei einfacher Handhabung ein kontrolliertes und damit zerstörungsfreies Einfrieren einer festen Gewebsprobe, ermöglicht, die sich von einer Lösung umgeben innerhalb des Behälters befindet. Zudem ist es Aufgabe der Erfindung, ein Verfahren zur Kryokonservierung zu schaffen, das insofern für feste Proben geeignet ist, als es diese schonend einfriert.

Diese Aufgaben werden durch den Behälter mit den Merkmalen des Anspruch 1 und das Verfahren nach Anspruch 11 gelöst. Vorteilhafte Ausführungsformen sind in den jeweiligen Unteransprüchen genannt.

Der erfindungsgemäße Behälter verkörpert in wesentlichen zwei Grundgedanken: So ist der eine Hauptgesichtspunkt, dass im Aufnahmeraum ein Aufnahmemittel vorgesehen ist, das als feste Struktur ausgebildetes Probematerial während des Einfrierens innerhalb des Aufnahmeraums in definierter Position hält. Dieses Aufnahmemittel ist vorteilhafterweise in seiner Konzeption an die Art der Probe anzupassen. Es sollte eine der Probe entsprechend große Halterung ausbilden, in der die Probe sicher einliegt. Dabei ist es erfindungswesentlich, dass in der definierten Position ein alleseitiges Umspülen der Probe gewährleistet ist, und dass diese Position in einem geeigneten Abstand zu der Startposition ist, an der die Bildung der Eiskristalle innerhalb des Behälters beginnt. Die definierte Position für die Gewebsprobe darf also nicht zusammenfallen mit dem Punkt innerhalb des Behälters, der sich aus der Anordnung des Kontaktelementes ergibt und an dem die Kristallisation ihren Anfang nimmt. Diese Startposition kann berechnet oder aber experimentell ermittelt werden. Dadurch, dass im Inneren des Behälters eine geordnete Eisfront entsteht, die lokal ausgelöst wird und sich dann gerichtet auf das einzufrierende Gewebe zu bewegt, kann ein besonders schonendes Einfrieren der festen Proben gewährleistet werden.

Der zweite Hauptgesichtspunkt liegt dann darin, dass in die Wandung des Behälters ein Kontaktelement mit hoher Wärmeleitfähigkeit, insbesondere aus Metall, eingelassen ist, wobei "eingelassen" im Hinblick auf den Einwegbehälter vorteilhafterweise bedeutet: "zum Großteil vom Kunststoff des Behälters umspritzt". Wichtig ist, dass eine Außenfläche des Kontaktelementes von außen derart zugänglich ist, dass sie unmittelbar mit einem Kälteerzeuger in Kontakt gebracht werden kann.

Ein weiterer wesentlicher Gesichtspunkt des erfindungsgemäßen Einwegbehälters ist, dass das Kontaktelement an einer Stelle in die Wandung eingelassen ist, an der der Abstand zur der durch das Aufnahmemittel definierten Position relativ gering ist, so dass die von einer Lösung umgebene Probe möglichst nur kurze Zeit später von der sich ausbildenden und durch den Aufnahmeraum wandernden Eisfront beaufschlagt wird, nachdem das Kontaktelement mit dem Kälteerzeuger zusammengebracht wurde. Damit kann der Punkt der Keimbildung, an dem der Gefrierprozess beginnt, so positioniert werden, dass statt einer chaotischen Dendritenbildung im gesamten Innenraum eine induzierte Eisfront entsteht, deren kontrollierte Wanderung die Probe nicht zerstört. Das kontrollierte und lokal umschriebene Entstehen der Eisfront wird dadurch erreicht, dass das Kontaktelement, insbesondere als Kühlplatte im Boden des Behälters oder als Kühlring in der Wandung des Behälters eingelassen ist. An diesen Stellen wird sich die Eisfront bilden, um sich dann im Inneren des Behälters auszubreiten. So wird eine zufällige Eisbildung im Behälter ausgeschlossen.

Damit die einzufrierende Gewebsprobe nicht direkt auf der Kühlplatte auf- oder an dem Kühlring anliegt, wird in definiertem Abstand zum kühlendem Kontaktelement eine Art Zwischenboden in den Behälter eingezogen. Auf diesem Zwischenboden kommt das Gewebe in definierter Position zur Auflage. Dabei darf der Abstand des Zwischenbodens zum Kühlelement nicht zu groß und nicht zu klein sein. Der optimale Abstand ergibt sich aus Berechnungen zum Temperaturgradienten im Einfriergefäß während der Eisbildung. Somit wird verhindert, dass das Gewebe zu dicht am Kühlelement liegt und - infolge des ungünstigen Gradienten an dieser Stelle - Gefrier-/Kälteschäden erleidet.

Der erfindungsgemäße Behälter eignet sich insbesondere für das Bindegewebe (Ektomesenchym) des gezogenen Weisheitszahnes oder für andere feste Proben wie das Gewebestück, das mittels Biospie am Lebenden aus einem Organ (Herz, Leber, Haut) oder Tumor entnommen worden ist. Auch ein künstliches Gewebe, das in der Zellkultur aus lebenden Zellen und einer Matrix (Fibrin, Kollagen) hergestellt wird, ist ein solches Gewebestück (Tissue Engineering).Der Behälter kann besonders vorteilhaft als Einmal-Behälter für derart menschliche Gewebsproben verwendet werden. Dabei dient er als Aufnahmegefäß, Transportgefäß und/oder Einfriergefäß. Mit diesem Behälter ist es möglich, das lebende Gewebe, insbesondere das Zahngewebe, unmittelbar nach der Entnahme steril unterzubringen, sicher zu transportieren und schonend einzufrieren, bevor es beispielsweise über flüssigem Stickstoff dauerhaft gelagert wird. Dabei erfolgt das Einfrieren idealerweise in Verbindung mit einem von einem Computer gesteuerten Einfrierautomaten, beispielsweise einem "IceCube-Freezer".

Wie oben angedeutet, ist ein besonders vorteilhaftes Einsatzgebiet des erfindungsgemäßen Behälters die Kryokonservierung von ektomesenchymalem Weichgewebe eines sich entwickelnden Zahnes, beispielsweise eines impaktierten Weisheitszahnes. Der Einsatz des Behälters ermöglicht eine nur kurze extrakorporale Verweildauer des Gewebes nach der Entnahme und ein sachgerecht durchgeführtes Einfrieren und Auftauen der Probe. Damit kann die größt mögliche Vitalität einer solchen Gewebsprobe nach Kryokonservierung gewährleistet werden.

Um eine einfache Herstellung und Handhabung zu ermöglichen, ist es vorteilhaft, wenn die Wandung des Behälters einen Zylinder mit insbesondere rundem Querschnitt und geschlossenem Boden ausbildet. Die Oberseite des Zylinders ist entsprechend offen und bildet damit die Öffnung aus. Vorteilhafterweise handelt es sich um einen zylindrisch geformten Kunststoffbehälter mit offener Deckel- und geschlossener Bodenseite. Die in der Deckelseite befindliche Öffnung erlaubt das schnelle und sichere Einbringen der Probe. Der Kunstoffbehälter ist kältebeständig und macht das dauerhafte Lagern des eingefüllten Gewebes bei sehr tiefen Temperaturen möglich. Der bruchsichere Behälter bildet damit einen Wegwerf-/Einmalartikel, der vorteilhafterweise mit steriler Lösung befüllt angeboten wird. Nach dem Eingeben der Probe wird er sicher und schnell verschlossen.

Die Konzeption des in die Wandung eingelassenen Kontaktelementes ist ein entscheidender Faktor für die Kontrolle des Einfrierprozess. Dabei sind für den erfindungsgemäßen Behälter zwei Arten von Kühlelementen zu bevorzugen: Zum einen kann das Kontaktelement als den Behälter umgebender Kühlring in einer bestimmten Höhe die Seitenwand eingelassen sein. Vorteilhafterweise bildet ein solcher Kühlring einen über die Wandung hinausstehenden Kragen aus, der bei eingestecktem Behälter auf dem Kontaktelement des Kälteerzeugers flächig aufliegt. Zum anderen kann es vorteilhaft sein, das Kühlelement als Kühlplatte in den Boden des Zylinders einzulassen. Beide Ausführungsformen ermöglichen, den Ort der Kristallbildung in der Lösung festzulegen. Eine insbesondere aus Metall bestehende Kühlplatte sollte einen Boden ausbilden, über den der Behälter unmittelbar auf ein entsprechend ebenes Kontaktelement des Kälteerzeugers, insbesondere auf eine Kälteplatte, flächig aufsetzbar ist.

Das Aufnahmemittel muss die Probe derart positionieren, dass sie von allen Seiten von der jeweiligen Lösung umspült wird. Diesbezüglich ist es vorteilhaft, wenn die Auflagefläche unterbrochen ist, wie es beispielsweise bei einer gitterartigen, eine Art Körbchen bildenden Struktur der Fall ist. Bevorzugt wird diese Struktur einstückig an die Innenwandung des Behälters angeformt, wobei es im Hinblick auf eine einfache Fertigung vorteilhaft ist, wenn die Struktur Rippen aufweist, die in den Aufnahmeraum hineinragen und zu einer körbchen- oder trichterförmigen Aufnahme nach unten hin zusammenlaufen. Damit kann der Behälter so konzipiert werden, dass der Ort des Einfrierens für das Gewebe vorherbestimmt ist, weil der Ort der ersten Eiskristallbildung innerhalb der Flüssigkeit und damit der Startpunkt der Eisfront vorherbestimmt ist und eine kontrollierte Eisbildung ("initiated freezing") erfolgt. Eine ungeordnete zufällige Eisbildung wird hingegen vermieden. Erst diese kontrollierte Eiskristallbildung und der definierte Probenort garantieren ein schonendes Einfrieren der Probe bei größtmöglichem Gewebeerhalt.

In einer besonders einfachen Ausführungsform ist das Aufnahmemittel von einem körbchenartigen Einsatz gebildet, der herausnehmbar in den Aufnahmeraum eingesetzt ist. Mit einem solchen Einsatz können fertige Behälter bestückt werden. Dabei ist der Einsatz so zu konzipieren, dass die eingelegte Probe allseitig umspült ist.

Um das Einsetzen eines solchen Einsatzes zu ermöglichen und/oder um die Möglichkeit des Austauschs der im Behälter vorhandenen Lösung zu schaffen, ist es vorteilhaft, wenn das Verschlusselement von einem Stopfen aus gummiartigem Material gebildet wird. Nach dem Eingeben der von Lösung umgebenen Probe wird der Stopfen aufgesetzt und von einer Bördelkappe aus Blech bedeckt. Die Bördelkappe wird dann mittels einer entsprechenden Bördelkappenzange verformt. Die Bördelkappe hält den Stopfen dichtend auf dem Rand der Öffnung und hintergreift einen die Öffnung umgebenden Kragen, der am Behälter angeformt ist. Um das Einstechen einer Kanüle in den Stopfen zu ermöglichen, weist die Bördelkappe eine Mittelöffnung auf. Für das einmalige Öffnen kann die Bördelkappe mit einer Lasche ausgestattet sein und eine Sollbruchlinie aufweisen. So kann der Nutzer bei Bedarf den Behälter schnell und komfortabel öffnen, um an die Probe zu gelangen.

Mit einem solchen Behälter kann die Zeitspanne zwischen der Operation, z.B. der Zahnentnahme, und dem Einfrieren minimiert werden, wobei das Absterben von Gewebszellen durch Austrocknung an der Luft durch das sofortige Einlagern der Probe in den mit steriler Lösung befüllten Behälter verhindert wird. Der Behälter ist in seiner Handhabung komfortabel und der Verschluss bietet ein Höchstmaß an Aufbewahrungsicherheit für das eingebrachte Patientengut. Zudem ist für den Nutzer die Arbeitssicherheit, beispielsweise der Schutz vor einer Infektion, gewährleistet. In den Behälter verbracht, kann das lebende Gewebe ohne zusätzliches Umlagern nicht nur steril aufbewahrt und sicher transportiert sondern auch sachgerecht tiefgefroren, gelagert und aufgetaut werden.

Wie schon dargelegt, sollte die chaotische Dendritenbildung während des Gefriervorgangs vermieden werden, da diese das Gewebe zerstören würde. Hingegen kann das Gewebe einen Gefrierprozess mit einer sich ausbreitenden Eisfront überstehen. Um derartige Randbedingungen zu schaffen, erfolgt der Gefriervorgang vorteilhafterweise in zwei Stufen: In der ersten Stufe wird das in Gefrierlösung befindliche Gewebe langsam von Zimmertemperatur auf etwa -8 °C abgekühlt. So haben die Gewebezellen genügend Zeit, ihre Stoffwechselprozesse anzupassen. Bei etwa -8°C ist die Flüssigkeit kurz davor, Dendriten zu bilden, wobei der negative Gefrierpunkt durch die in der Gefrierlösung befindlichen Salze herrührt. In der zweiten Stufe bewirkt eine Kühlvorrichtung durch direkten Kontakt mit dem Kontaktelement eine schnelle lokale Abkühlung der nahe gelegenen Flüssigkeitsvolumina, wodurch zuerst dort die Bildung der Eis- bzw. Gefrierfront induziert wird. Damit ist der Ort der einsetzenden Eisbildung definiert.

Die Bewegung der Gefrierfront wird durch die Richtung des Temperaturgradienten vorgegeben: Im Fall des als Bodenplatte ausgebildeten Kontaktelementes ist ein starker Temperaturgradient gegeben, der exponentiell vom Boden in Richtung der Symmetrieachse des Behälters (z-Achse) abfällt. Entsprechend breitet sich auch die Gefrierfront in der Flüssigkeit aus. Wenn das Kontaktelement als Kühlring ausgebildet ist, verläuft der Temperaturgradient radialsymmetrisch von der Innenwand des Behälters zur Symmetrieachse. Damit ist die Richtung der sich ausbreitenden Eisfront vorgegeben. Die gewünschte Bewegungsart der Eisfront, nämlich eine propagierende Eisfront mit minimaler Ausbildung der von ihr ausgehenden Dendriten ("geordnete Gefrierfront") stellt sich in genau den Flüssigkeitsvolumina ein, wo der Temperaturgradient verhältnismäßig groß ist. Das ist durch die theoretisch vorhersagbare Wahrscheinlichkeit für eine chaotische Dendritenbildung in Flüssigkeitsvolumina nahe der Eisfront begründet, die mit ansteigendem Temperaturgradienten exponentiell abfällt. Damit ist die Ausbreitung einer "glatten" Eisfront gewährleistet. Aus diesen Gründen ist es vorteilhaft, wenn das feste Gewebe vermittels des Aufnahmemittels innerhalb der Flüssigkeit an der Stelle des größt möglichen Temperaturgradienten befindet, was durch das erfindungsgemäße Aufnahmemittel und dessen Positionierung im Innenraum sichergestellt werden kann.

Zudem ist es vorteilhaft, großflächig dimensionierte Kontaktelemente vorzusehen, die eine der Symmetrie des Behälters angepasste propagierende "ordentliche" Gefrierfront, beispielsweise in z-Richtung oder radialsymmetrisch, erzeugen, die das Gewebe unter Verhinderung von chaotischer Dendritenbildung einfriert. Das Verhältnis der Wärmeleitfähigkeiten von Behälterwand zu Kontaktelement sollte möglichst groß sein, da nur bei großem Temperaturgradienten die Wahrscheinlichkeit für eine Dendritenbildung nahe der propagierenden Gefrierfront klein ist. Aus diesem Grund ist auch eine definierte Positionierung des Gewebes unmittelbar in der Nähe des Kühlelements, wo ein großer Temperaturgradient herrscht, vorzusehen.

Das Design der erfindungsgemäßen Kühlelemente berücksichtigt ferner die unterschiedlichen Wärmeausdehnungskoeffizienten, die beim Abkühlungsprozess dafür sorgen, dass Scherspannungen an den Oberflächen Metall/Kunststoff sowie ein Kontaktverlust des Kühlelements und damit eine abnehmende Effektivität im Kühlungsprozess auftreten. Dazu ist das als Kontaktelement ausgebildete Kühlelement vorteilhafterweise in den Behälter eingegossen. Zudem können sternförmige Kühlrippen oder andere geeignete Strukturen auf der Oberfläche des Kontaktelements vorgesehen sein, die den auftretenden Scherspannungen Rechnung tragen. Abgeschrägte Kanten können beim Abkühlungsprozess ein Anpressen des Kühlelements durch den umgebenden Kunststoff bewirken.

Um die Gefahr der Kontamination durch eindringende Keime zu minimieren, kann der Behälter mit einer äußeren sterilisierten Verpackung umgeben werden, so dass er auch äußerlich steril bis zum Arzt gelangt. Unter solchen Voraussetzungen sollte der Arzt die folgenden beschriebenen Tätigkeiten am Behältersystem wenn möglich innerhalb der äußeren Verpackung vornehmen, indem er unter möglichst aseptischen Bedingungen einen Zugang zum Behälter schafft.

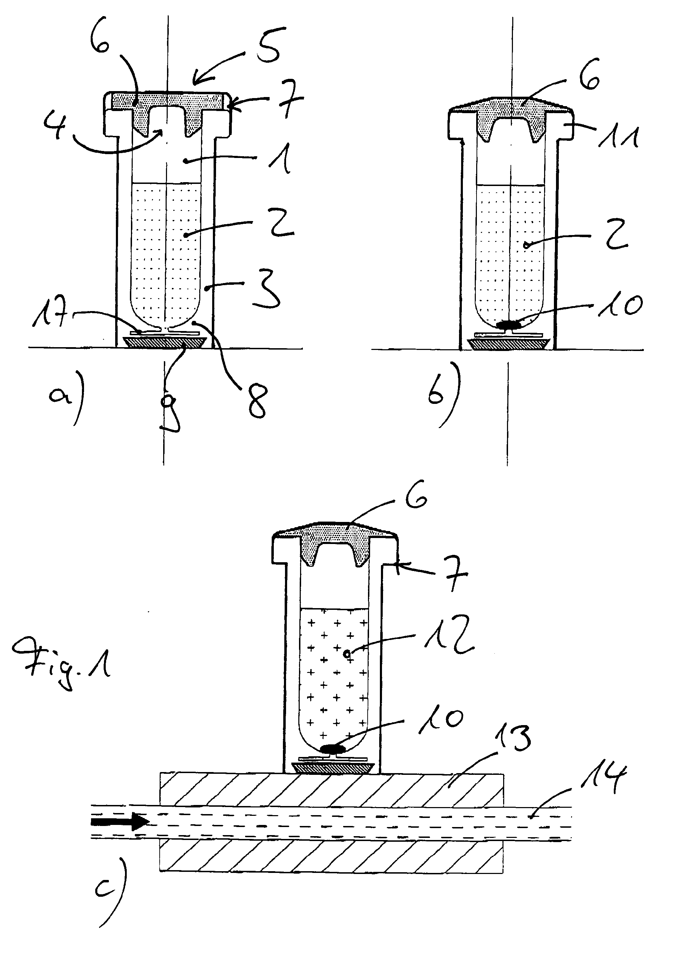

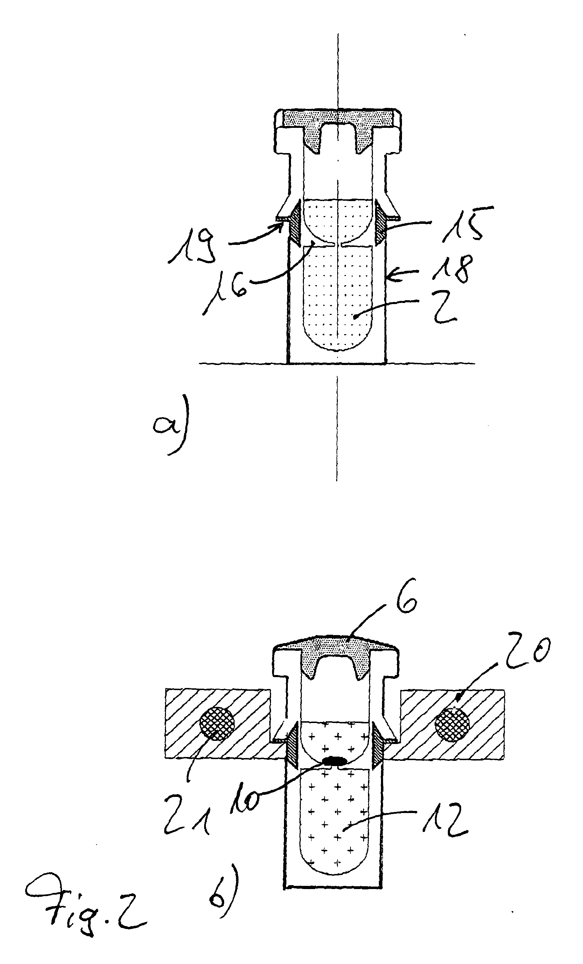

Nachfolgend wird die Erfindung anhand der Figuren 1 und 2 näher erklärt. Es zeigen:
- **Figuren 1 a) bis c)**: eine Variante des Behälters mit Kühlplatte und
- **Figuren 2 a) und b)**: eine Variante des Behälters mit Kühlring.

In Figur 1 zeigt einen Behälter, wie er insbesondere für die Kryokonservierung von Weichgewebe des Zahnes eingesetzt werden kann. Dieser hat einen Aufnahmeraum 1 zur Aufnahme einer die Probe umspülenden Lösung 2, wobei der Behälter zunächst mit einer Lösung befüllt vom Hersteller geliefert wird. Der Aufnahmeraum ist von einer Wandung 3 aus tieftemperaturbeständigem durchsichtigen Kunststoff, beispielsweise aus Cyclic Polyolefine (COP), der die geforderten medizinisch-pharmazeutischen Qualitätsstandards erfüllt, umgeben. Die den Behälter bildende Wandung 3 ist von zylindrischer Form und hat ein Fassungsvermögen von etwa 2 ml.

Der Aufnahmeraum 1 ist von oben über eine Öffnung 4 zugänglich, wobei die Öffnung nach Eingabe einer Probe mit einem Verschlusselement 5 dichtend verschlossen wird. Das Verschlusselement 5 weist einen Stopfen 6 aus Gummi (z.B. Halobutyl) auf, wobei der aufgesetzte Stopfen 6 von einer Bördelkappe 7 aus Alu-Blech bedeckt ist. Die Bördelkappe 7 hält den Stopfen dichtend auf dem Rand der Öffnung und hintergreift einen die Öffnung umgebenden Kragen. Es kann sich um einen Standard-Einwegverschluss aus der pharmazeutischen Industrie handeln, der einem "Gummi-Pharmastopfen" und eine Bördelkappe 7 mit Originalitätssiegel aufweist. In Figur 1 a ist das Verschlusselement 5 in einem Zustand gezeigt, in dem es noch abnehmbar ist, da die Bördelkappe 7 noch nicht aufgebördelt, sondern lediglich aufgesetzt ist. Schon dieser aufgesetzte Stopfen kann den Behälter bereits flüssigkeitsdicht abschließen. In dem in Figur 1a gezeigten mit Nährlösung gefüllten Zustand kann der Behälter vom Hersteller angeboten werden, wobei jeder einzelne Behälter luftdicht von einer Blisterverpackung umgeben ist.

Im Aufnahmeraum 1 ist ein Aufnahmemittel vorgesehen, das die Probe während des Einfrierens in definierter Position hält. Das Aufnahmemittel bildet eine unterbrochene Struktur aus, wobei Rippen 8 oder Positionierungsstege vorgesehen sind, die einstückig an die Innenwandung des Behälters angeformt sind und die ein allseitiges Umspülen der Probe gewährleisten. Die Rippen ragen in den Aufnahmeraum 1 hinein und laufen zu einer schalenförmigen Aufnahme zusammen. Durch die konkave geformte Oberseite der Rippen 8 wird die Gewebsprobe stets mittig im Behälter auf der Symmetrieachse positioniert. Unterhalb der Rippen 8 verbleibt ein von Lösung bedeckter Bodenbereich 17 des Aufnahmeraumes.

Im Bodenbereich des Behälters ist in die Wandung 3 ein Kontaktelement aus Metall mit hoher Wärmeleitfähigkeit, beispielsweise Kupfer, eingelassen, das als Kühlplatte 9 ausgebildet ist. Die Kühlplatte 9 hat eine von unten zugängliche Außenfläche, die, wie bei einem Kochtopf, zur unmittelbaren Kontaktierung mit einem Kälteerzeuger ausgebildet ist. Sie hat die Aufgabe, einen effektiven Kälteaustausch zwischen dem Behälterinhalt und der Umgebung im Einfriergerät herzustellen. Dabei besteht kein unmittelbarer Kontakt zum sterilen Innenraum. Um einen gleichbleibenden Kühlkontakt während des Einfriervorgangs zu garantieren, muss berücksichtigt werden, dass der Kunststoff gegenüber dem Kontaktelement einen sehr viel größeren Ausdehnungskoeffizienten besitzt. Die Folge ist, dass sich der Kunststoff sehr viel stärker zusammenzieht als das Kontaktelement. Aus diesem Grund sind die Ränder des Kontaktelementes abgeschrägt, damit der umgebende Kunststoff eine Kraft ausüben kann, die das Kontaktelement an die Behälterwand presst. Das verhindert auch ein Lösen und Abfallen bei einer Erwärmung. Zudem ist die Oberfläche, die in Kontakt mit dem Kunststoff steht, z.B. durch sternförmig nach außen verlaufende Kühlrippen auf der Oberfläche der Bodenplatte so strukturiert oder angeraut, dass durch die auftretenden Zugspannungen keine signifikante Kontaktverminderung entsteht.

Nachdem eine Probe 10 (Figur 1 b) in die Lösung 2 eingebracht und auf die Rippen 8 aufgelegt ist, wird die Bördelkappe 7 mit einer Bördelkappenzange auf den Pharmastopfen 6 gepresst, wobei dieser sich verformt. Die aufgebördelte Bördelkappe 7 hintergreift dann den die Öffnung 4 umgebenden Kragen 11 und verschließt den Inhalt des Behälters fest und zuverlässig. Der aufgebördelte Pharmastopfen schützt den Inhalt sicher vor äußeren Einflüssen während des Transports. Nach dem Verschließen ist der Inhalt des Behälters nur noch nach Entfernen des Originalsigels zugänglich. Zum Schutz des freiliegenden Membranbereichs ist es möglich, die entsiegelte Bördelkappe mit einer leicht elastischen Plastikhaube zu versehen.

In Figur 1 c ist die Situation nach dem Transport und während des Einfrierens gezeigt: Zunächst wurde mit einer Injektionsnadel durch den Pharmastopfen 6, der als keimdichte Membran dient, hindurchgestochen und über die Kanüle die vorhandene Lösung entnommen und durch Gefrierlösung 12 ersetzt. Dazu weist Bördelkappe 7 eine Mittelöffnung auf, um das Einstechen einer Kanüle in den Stopfen 6 zu ermöglichen Das Einstichloch verschließt sich nach dem Herausziehen der Kanüle wieder keimdicht. Zum Einfrieren wird der Behälter mit der Kühlplatte 9 auf die ebenfalls aus Kupfer gefertigte Kontaktplatte 13 eines Einfriergerätes aufgestellt. Zum induzierten Einfrieren wird diese mit flüssigem Stickstoff 14 kurzzeitig durchspült. Die derart kryokonservierte Probe kann dann in eine Organbank verbracht und gelagert werden.

In Figur 2 ist ein erfindungsgemäßer Behälter mit einem als Kühlring 15 ausgebildeten Kontaktelement gezeigt. In diesem Fall sind die Rippen 16, welche das Aufnahmemittel ausbilden in einer größeren Höhe angebracht. Der Kühlring 15 bildet einen über die Wandung 18 hinausstehenden Kragen 19 aus, der bei eingesteckten Behälter auf dem Kontaktelement 20 des Kälteerzeugers flächig aufliegt (Figur 2b). Über den Kragen 19 wird der Behälter 1 im Kontaktelement 20 gehalten, wenn dieses mit flüssigem Stickstoff 21 durchspült wird. Ansonsten ist der Behälter nach Figur 2 in seinen Merkmalen insbesondere mit dem Verschluss identisch zum Behälter nach Figur 1.

Handhabung eines in diesem Fall mit Kühlplatte ausgestatteten Behälters:

Der Hersteller befüllt das beschriebene Behältersystem unter sterilen Reinraumbedingungen mit einer für Zahngewebe geeigneten Lösung. Nach der Abfüllung wird der Pharmastopfen handfest auf den Behälter gedrückt und schließt flüssigkeitsdicht ab. Die Bördelkappe wird lose aufgesetzt und mit Transport-Plastikfolie umwickelt, um das Abfallen des Stopfens zu vermeiden. Der so präparierte Behälter wird steril verpackt. Der Arzt erhält das steril verpackte mit Lösung abgefüllte Behältersystem, entfernt die Plastikfolie vom Gefäß, nimmt Bördelkappe und Pharmastopfen ab und legt das frisch extrahierte Zahngewebe hinein. Um das Gefäß sicher für den Transport verschließen zu können, ist der Arzt mit einer Bördelkappenzange ausgestattet: Er drückt den Pharmastopfen wieder auf die Behälteröffnung, setzt die Bördelkappe auf und verschließt den Behälter mit der Bördelkappenzange keimdicht und transportsicher.

Nach der Ankunft bei der Institution, die das Probenmaterial konserviert, nimmt ein autorisierter Mitarbeiter das verschlossene Behältersystem entgegen und prüft die Unversehrtheit des Originalitätssiegels. Im Labor wird unter sterilen Bedingungen das Originalitätssiegel entfernt und die vorhandene Lösung per Nadelinjektion durch eine Gefrierlösung ersetzt.

Mit Hilfe eines Einfriergerätes wird das Gewebe in einem automatisierten Kühlungsprozess nach einer speziellen vorgegebenen Temperatur-Sollkurve eingefroren: Im Einfriergerät steht der Behälter auf einer Metallplatte, die mit Flüssigstickstoff gekühlt werden kann. In der Stufe 1 erfolgt die Kühlung des Behälters zunächst noch über Luft, die sich an der mit Flüssigstickstoff gekühlten Kammerwand des Einfriergeräts abgekühlt hat. So wird das Behältersystem zunächst langsam von Zimmertemperatur auf ca. -8°C bis -9°C abgekühlt. Bei dieser Temperatur befindet sich die Flüssigkeit in einem unterkühlten Zustand-Dendriten sind aber noch nicht feststellbar. In der 2. Stufe wird die Metallplatte mit Flüssig-Stickstoff durchflutet. Durch die direkte Kopplung mit dem Kontaktelement am Behälter entsteht lokal in Bodennähe ein starker Temperaturgradient, der zu einer sofortigen Eisfront führt, die das Gewebe von unten nach oben einfriert. Der so eingefrorene Behälter wird bei ca. -120°C entnommen und nach kurzem Transportweg dauerhaft über flüssigem Stickstoff bei ca. -196°C gelagert.

## Patentansprüche

1. Behälter für die Kryokonservierung einer festen Gewebsprobe (10), insbesondere von Zahngewebe, aufweisend einen Aufnahmeraum (1) zur Aufnahme einer die Probe (10) umspülenden Lösung (2,12), wobei der Aufnahmeraum (1) von einer Wandung (3) aus tieftemperaturbeständigem Material mit einer geringen Wärmeleitfähigkeit, insbesondere aus Kunststoff, umgeben ist, wobei der Aufnahmeraum (1) über eine Öffnung (4) zugänglich ist und wobei die Öffnung (4) nach Eingabe der Probe (10) mit einem Verschlusselement (5) dichtend verschließbar ist,
**dadurch gekennzeichnet,**
**dass** in die Wandung (3) ein Kontaktelement (9,15) mit hoher Wärmeleitfähigkeit, insbesondere aus Metall, eingelassen ist, wobei eine Außenfläche des Kontaktelementes (9,15) von außen zugänglich ist und zur unmittelbaren Kontaktierung mit einem Kälteerzeuger (13) ausgebildet ist, wobei im Aufnahmeraum (1) ein Aufnahmemittel (8,16) vorgesehen ist, das die Probe (10) während des Einfrierens in Position hält, wobei die definierte Position in einem Abstand zu der Startposition ist, an der die Bildung der Eiskristalle beginnt.

2. Behälter nach Anspruch 1,
**dadurch gekennzeichnet,**
**dass** der festgelegte Abstand so bemessen ist, dass bei Kontaktierung mit dem Kälteerzeuger im Inneren des Behälters eine geordnete Eisfront entsteht, die sich gerichtet auf die einzufrierende Probe hin bewegt.

3. Behälter nach Anspruch 1 oder 2,
**dadurch gekennzeichnet,**
**dass** die Wandung (3) einen Zylinder mit insbesondere rundem Querschnitt ausbildet, wobei die Oberseite des Zylinders offen ist und damit die Öffnung (4) ausbildet.

4. Behälter nach Anspruch 3,
**dadurch gekennzeichnet,**
**dass** das Kontaktelement als Kühlring (15) in die Seitenwand und/oder als Kühlplatte (9) in den Boden des Zylinders eingelassen ist.

5. Behälter nach Anspruch 4,
**dadurch gekennzeichnet,**
**dass** die aus Metall bestehende Kühlplatte (9) einen Boden ausbildet, über den der Behälter unmittelbar auf ein entsprechend ebenes Kontaktelement (13) des Kälteerzeugers, insbesondere auf eine Kälteplatte, flächig aufsetzbar ist.

6. Behälter nach Anspruch 4,
**dadurch gekennzeichnet,**
**dass** der Kühlring (15) einen über die Wandung (3) hinausstehenden Kragen (19) ausbildet, der bei eingesteckten Behälter auf dem Kontaktelement (20) des Kälteerzeugers flächig aufliegt.

7. Behälter nach einem der vorherigen Ansprüche,
**dadurch gekennzeichnet,**
**dass** das Aufnahmemittel von einer unterbrochenen Struktur gebildet wird, die einstückig an die Innenwandung des Behälters angeformt ist und die ein allseitiges Umspülen der Probe (10) gewährleistet.

8. Behälter nach Anspruch 7,
**dadurch gekennzeichnet,**
**dass** die Struktur Rippen (16,17) aufweist, die in den Aufnahmeraum (1) hineinragen und zu einer körbchenartigen Aufnahme zusammenlaufen.

9. Behälter nach einem der vorherigen Ansprüche,
**dadurch gekennzeichnet,**
**dass**das Aufnahmemittel von einem körbchenartigen Einsatz gebildet wird, der herausnehmbar in den Aufnahmeraum eingesetzt ist, wobei eine in den Einsatz eingelegte Probe allseitig umspült ist.

10. Körbchenartiger Einsatz, der in einen Behälter für die Kryokonservierung nach Anspruch 1 einsetzbar ist und zur Aufnahme einer festen Gewebsprobe dient.

11. Verfahren zur Kryokonservierung einer von einer Lösung umspülten festen Gewebsprobe, die in einen Behälter, insbesondere nach Anspruch 1, eingesetzt wird, wobei die Gewebsprobe in ein im Behälter befindliches Aufnahmemitel eingelegt wird, das die allseitige Umspülung der Gewebsprobe gewährleistet, der mit der Gewebsprobe versehene und mit umgebender Lösung befüllte Behälter in einem automatisierten Kühlungsprozess nach einer speziellen vorgegebenen Temperatur-Sollkurve eingefroren wird.
